**Europäisches Patentamt**

**European Patent Office**

**Office européen des brevets**

(19)

(11) Numéro de publication : **0 262 187 B1**

# (12) FASCICULE DE BREVET EUROPEEN

(45) Date de publication du fascicule du brevet :
**04.03.92 Bulletin 92/10**

(51) Int. Cl.$^5$ : **B26F 1/31**

(21) Numéro de dépôt : **87902103.8**

(22) Date de dépôt : **24.03.87**

(86) Numéro de dépôt international :
**PCT/FR87/00089**

(87) Numéro de publication internationale :
**WO 87/05850 08.10.87 Gazette 87/22**

(54) **PROCEDE DE REALISATION DE PERFORATIONS DANS UN MATERIAU SOLIDE EN FEUILLE, DISPOSITIF D'IRRADIATION POUR LA MISE EN UVRE DU PROCEDE ET MATERIAU PERFORE AINSI OBTENU.**

(30) Priorité : **25.03.86 FR 8604263**

(43) Date de publication de la demande :
**06.04.88 Bulletin 88/14**

(45) Mention de la délivrance du brevet :
**04.03.92 Bulletin 92/10**

(84) Etats contractants désignés :
**AT BE CH DE FR GB IT LI LU NL SE**

(56) Documents cités :
**EP-A- 0 109 147
DE-C- 732 085
GB-A- 1 375 204
US-A- 3 303 085
US-A- 3 493 751
US-A- 3 612 871
US-A- 3 670 500
US-A- 3 677 844
US-A- 3 713 921
US-A- 3 852 134
US-A- 4 115 303**

(56) Documents cités :
**Science, Volume 149, no. 3682, 23 juillet 1965, (Lancaster, US), R.L. Fleischer et al.: "Tracks of charged particles in solids", see pages 383-393
Physical Review, volume 133, no. 5A, 2 mars 1964, (New York, US), R.L. Fleischer et al.: "Track registration in various solid-state nuclear track detectors", see pages A1443-A1449.**

(73) Titulaire : **UNIVERSITE CATHOLIQUE DE LOUVAIN
Place de l'Université, 1
B-1348 Louvain la Neuve (BE)**

(72) Inventeur : **LEGRAS, Roger
6, rue des Bourgmestres
B-4280 Hannut (BE)**
Inventeur : **JONGEN, Yves
19B, route de la Marache
B-1328 Ohain (BE)**

(74) Mandataire : **Derambure, Christian
Cabinet Bouju Derambure (Bugnion) S.A. 55, rue Boissonade
F-75014 Paris (FR)**

EP 0 262 187 B1

## Description

L'invention concerne un procédé de réalisation de perforations dans un matériau solide en feuille, un dispositif d'irradiation pour la mise en oeuvre du procédé et le matériau perforé ainsi obtenu.

On connaît déjà l'obtention de perforations dans un matériau solide en feuille par réalisation, dans une première phase, de traces d'endommagement (Physical Review, Volume 133a, N° 5a, 1964, pages 1443 et suivantes ; Sience, volume 149, N° 3682, 1965, pages 383 et suivantes).

Plusieurs variantes de mise en oeuvre de ce procédé ont été proposées. Le brevet US 3 303 085 décrit l'obtention de perforations dont la dimension transversale (diamètre) est comprise entre 5 et 20 000 Å dans une feuille de mica de 100 microns d'épaisseur. La feuille de mica est placée dans un réacteur et bombardée par des particules $\alpha$ ou des ions oxygène puis traitée chimiquement au moyen d'une solution d'acide fluorhydrique. Le brevet US 3 493 751 décrit l'obtention de perforations dans une feuille de nitrate de cellulose dont l'épaisseur est de 0,02 mm environ. La feuille de nitrate de cellulose est bombardée de particules $\alpha$ dont l'énergie est de l'ordre de 4,5 Mev puis traitée chimiquement au moyen d'une solution aqueuse six fois d'hydroxyde de sodium entre 60°C et 70°C pendant 30 secondes. Le brevet US 3 612 871 décrit l'obtention de perforations dans une feuille de résine synthétique notamment de polycarbonate. La feuille de polycarbonate est irradiée dans un réacteur nucléaire puis soumise à une radiation électro-magnétique de longueur d'onde inférieure à 4 000 Å dont l'énergie est au moins de 1,5 Mev et enfin traitée chimiquement au moyen d'une solution aqueuse d'hydroxyde de sodium à environ 60°C pendant 20 secondes.

Le brevet GB 1 375 204 considéré comme l'état de la technique plus proche et servant de base aux préambules des revendications indépendantes décrit l'obtention de perforations dans un film en matériau non conducteur par irradiation au moyen d'ions suffisament lourds et energisés, suivie d'un traitement chimique en vue d'élargir les traces laissées par le passages des ions. Les matériaux envisagés sont le polyéthylène téréphtalate, le polytétrafluoréthylène, le polycarbonate, le verre, le polychlorure de vinyle. L'énergie du bombardement d'ions est comprise entre 5 Mev et 20 Mev. Les ions considérés sont des ions d'argon, de chlore, de fer. La densité du bombardement est comprise entre $5.10^{12}$ et $9.10^{13}$ traces par pouce carré. La membrane ainsi bombardée peut-être étirée ou chauffée.

D'autres variantes de mise en oeuvre sont envisagées dans l'état de la technique (brevets US 3 713 921, 3 852 134, 3 677 844, FR 2 181 215).

Ainsi que cela résulte de l'état connu de la technique, on s'est surtout attaché, jusqu'à présent, à définir les conditions physico-chimiques du procédé considéré, plus que les modalités de sa mise en oeuvre industrielle permettant d'obtenir à des conditions économiques acceptables et selon un processus suffisamment aisé - notamment en continu - un matériau en bande percé de perforations, de bonne qualité - notamment en ce qui concerne l'homogénéité des perforations et leur régularité dimensionnelle -. Jusqu'à présent, le procédé a été essentiellement mis en oeuvre au moyen de réacteurs nucléaires plutôt qu'au moyen d'accélérateurs de particules. Et, l'emploi d'un accélérateur de particules et du dispositif d'irradiation associé pose un certain nombre de problèmes qui, s'ils ne sont pas réglés, peuvent conduire soit à limiter l'emploi de tels accélérateurs, soit à réaliser des perforations de qualité insuffisante.

Plus spécialement, le traitement d'un matériau en bande, en continu, est rendu difficile du fait du vide poussé existant dans le dispositif d'irradiation associé en aval de l'accélérateur et de la vitesse insuffisante du traitement chimique. De plus, le faisceau de particules produit par l'accélérateur est tel qu'il conduit normalement à une répartition des perforations dans le matériau insuffisamment homogène et donc peu acceptable pour certaines applications. Enfin, le faisceau, s'il est intense, peut produire sur le matériau des impacts immédiatement voisins qui, après traitement chimique, conduisent à des perforations multiples composées de plusieurs perforations élémentaires (deux, voire trois perforations).

Il en résulte alors une diminution de la régularité dimensionnelle des perforations et donc une perte de la sélectivité du matériau en ce qui concerne son pouvoir filtrant résultant des perforations.

L'invention vise donc à résoudre le problème d'une mise en oeuvre industrielle du procédé décrit précédemment (bombardement puis traitement chimique) afin de fabriquer un matériau en bande, perforé, à des conditions économiques acceptables et de très bonne qualité, notamment en ce qui concerne l'homogénéité des perforations et leur régularité dimensionnelle et ceci en utilisant un dispositif d'irradiation associé à un accélérateur de particules.

L'invention propose donc d'abord, un procédé de réalisation de perforations dans un matériau solide en feuille dans lequel on bombarde d'abord le matériau avec des ions lourds fortement ionisés au moyen d'un dispositif d'irradiation afin d'obtenir des traces d'endommagement du matériau dans son épaisseur et on attaque ensuite sélectivement le matériau ainsi bombardé le long des traces d'endommagement afin d'obtenir une perforation caractérisé en ce qu'on met en oeuvre un cyclotron isochrone combiné au dispositif d'irradiation et placé en amont et un faisceau d'ions ayant une énergie de l'ordre de 2 MeV par nucléon et une intensité

comprise entre $10^6$ et $10^{13}$ ions par seconde ; on dévie le faisceau d'ions bombardant le matériau ; et on fait défiler le matériau.

De plus, on travaille en continu, ainsi qu'il est expliqué ci-dessous, la feuille de matériau formant une bande défilant d'abord dans le dispositif d'irradiation puis dans au moins un bain de traitement chimique. Selon une autre caractéristique de l'invention, on traite chimiquement le matériau ayant ainsi reçu des traces d'endommagement au moyen d'une solution de produit d'attaque dans un solvant organique. Le solvant organique sélectionné est un alcool notamment l'éthanol, l'isopropanol ou préférentiellement le méthanol. Selon d'autres caractéristiques de l'invention, on dévie le faisceau de particules accélérées de manière à balayer transversalement la bande de matériau ce qui a pour fonction de régulariser la densité des perforations sur le matériau et on fait varier l'angle d'attaque du matériau par les particules ce qui a pour fonction de tendre à éviter les perforations multiples et donc permet d'obtenir un matériau perforé de bonne sélectivité.

L'invention concerne également un dispositif pour la réalisation de perforations dans un matériau solide en feuille comprenant un dispositif d'irradiation ; une enceinte à vide dans laquelle est logé le matériau, caractérisé par le fait qu'au dispositif d'irradiation est combiné un cyclotron isochrone placé en amont lequel permet un bombardement d'ions lourds de l'ordre de 2 MeV par nucléon et avec une intensité comprise entre $10^6$ et $10^{13}$ ions par seconde ; à l'enceinte à haut vide est associé un caisson étanche, un diaphragme apte à ne pas ralentir substantiellement la vitesse des ions séparant l'enceinte à haut vide et le caisson étanche ; un dérouleur du matériau étant logé dans le caisson ; et il comprend des moyens pour dévier le faisceau d'ions. Selon d'autres caractéristiques de l'invention le dispositif d'irradiation comporte outre les moyens pour dévier le faisceau de particules, des moyens pour faire varier l'angle d'attaque des particules sur la bande de matériau à traiter.

L'invention concerne enfin un matériau obtenu par la mise en oeuvre du procédé. Ce matériau synthétique, notamment polymère, peut avoir une épaisseur de l'ordre de quelques microns à plus de 100 microns et une densité de perforations par $cm^2$ pouvant atteindre $10^{11}$, les perforations pouvant avoir un diamètre compris entre 100 et 100 000 Ä.

L'invention est remarquable en ce qu'elle permet la réalisation, en continu, de matériau ainsi perforé non seulement dans des conditions économiques très satisfaisantes mais encore avec une excellente qualité, ce qui est susceptible d'élargir considérablement le champ d'utilisation de ce type de matériau perforé, qui peut être utilisé, par exemple, comme membrane d'ultra filtration.

Les autres caractéristiques de l'invention résulteront de la description qui suivra en référence aux dessins annexés dans lesquels :

– La figure 1 est une vue schématique en coupe par un plan axial illustrant l'enceinte à haut vide du dispositif d'irradiation et le caisson étanche du dérouleur associé.

– La figure 2 est une vue schématique en perspective illustrant les moyens pour dévier le faisceau de particules dans le dispositif d'irradiation.

– La figure 3 est une vue schématique en élévation d'une bande de matériau montrant la zone de bombardement et le balayage par le faisceau de particules.

– La figure 4 est une vue schématique de côté illustrant une première variante possible de moyens pour faire varier l'angle d'attaque des particules sur la bande de matériau à traiter.

– Les figures 5 et 6 sont deux vues schématiques en perspective illustrant une seconde variante possible des moyens pour faire varier l'angle d'attaque des particules sur le matériau à traiter, dans deux états successifs.

– Les figures 7 et 8 sont deux vues schématiques en perspective illustrant le matériau obtenu par la mise en oeuvre du procédé, respectivement selon les deux variantes de moyens pour faire varier l'angle d'attaque envisagées.

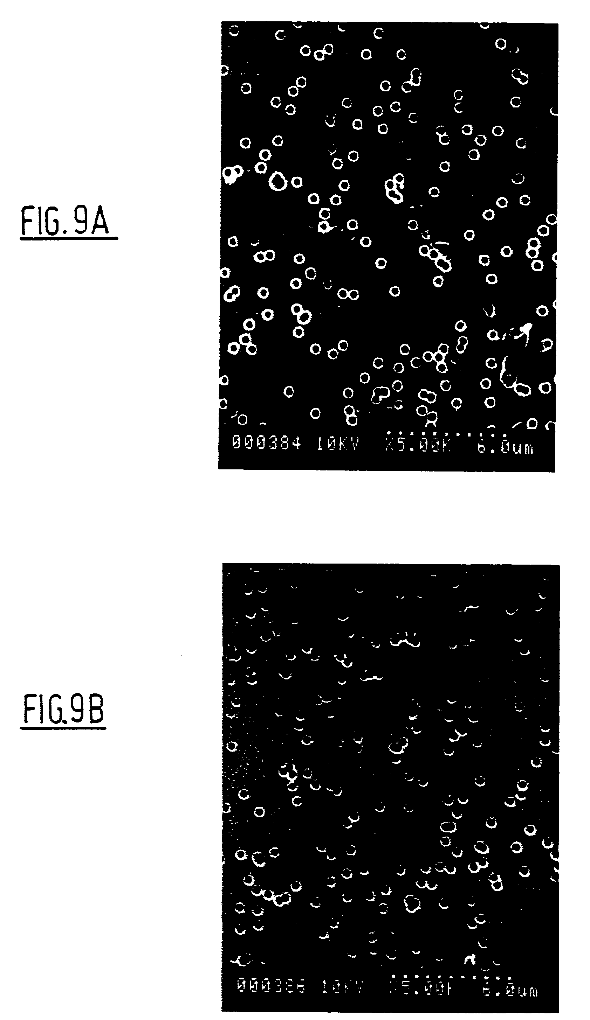

– Les figures 9A, 9B illustrent deux vues à plus grande échelle des deux faces A et B d'un film selon un test n° 1, traité par le procédé selon l'invention ; ces deux vues étant obtenues par microscopie à balayage.

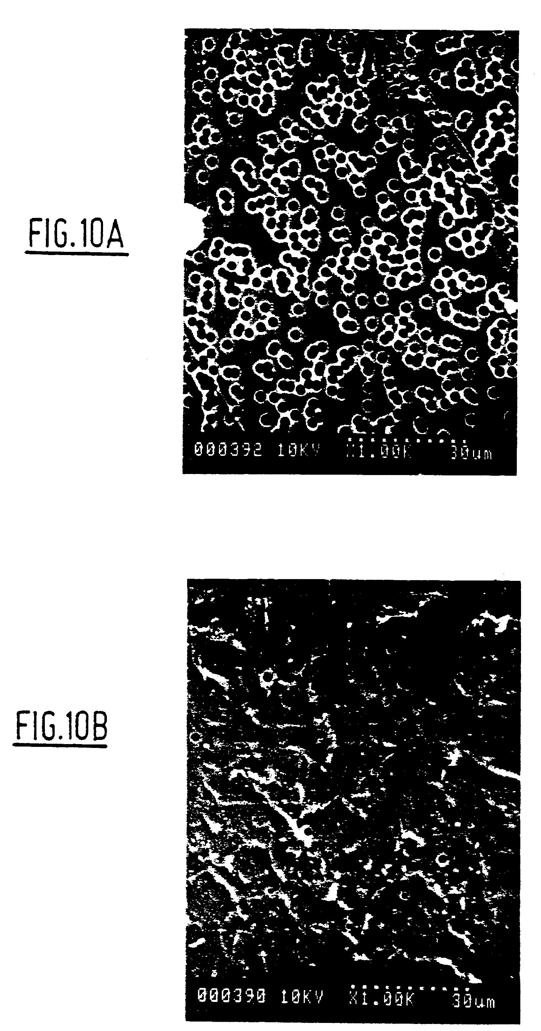

– Les figures 10A et 10B illustrent deux vues semblables avec un film selon un test n° 2.

L'invention concerne un procédé d'obtention de perforations 1 dans un matériau solide en feuille 2 dans lequel on soumet d'abord le matériau 2 à un bombardement de particules 3 afin d'obtenir des traces d'endommagement du matériau 2 dans son épaisseur, puis on attaque sélectivement le matériau 2 ainsi bombardé le long des traces d'endommagement afin d'obtenir les perforations 1 qui, normalement, traversent le matériau 2 de part en part.

Selon l'invention, on soumet le matériau 2 à un bombardement d'ions lourds 3 fortement ionisés et accélérés ayant une énergie de l'ordre de 2 Mev par nucléon, le faisceau de particules accélérées 3 ayant une intensité comprise entre $10^6$ et $10^{13}$ ions par seconde et ceci au moyen d'un dispositif d'irradiation 4 plus spécialement combiné à un cyclotron isochrone placé en amont de ce dispositif d'irradiation 4.

Les particules 3, ont, dans le faisceau qu'elles constituent, des cheminements au moins sensiblement

EP 0 262 187 B1

parallèles. Le matériau 2 dans sa zone de bombardement avec les particules 3 est placé au moins sensiblement perpendiculairement au faisceau de particules 3. Le faisceau a, en section droite transversale, un contour approprié, notamment rectangulaire, dont le grand côté est par exemple égal ou de l'ordre de 50 mm et dont le petit côté est par exemple égal ou de l'ordre de 10 mm.

Le matériau 2 forme une bande défilant, notamment à vitesse linéaire constante, dans le dispositif d'irradiation 4 et, éventuellement, ultérieurement, dans un ou plusieurs bains de traitement chimique, ce qui permet de travailler en continu sur des longueurs importantes de matériau 2 et donc d'automatiser commodément le procédé. Plus précisément, on traite en continu une certaine longueur de matériau 2 -par exemple pouvant atteindre plusieurs mètres ou dizaines de mètres- dans le dispositif d'irradiation 4 en le faisant défiler à une vitesse linéaire appropriée généralement constante. Puis, ultérieurement, cette même longueur de matériau 2 est traitée chimiquement soit de façon dynamique en défilant dans un ou plusieurs bain de traitement chimique à une vitesse linéaire appropriée, identique ou non à la vitesse de défilement dans le dispositif d'irradiation 4, soit de façon statique en étant plongée dans son ensemble dans ce ou ces bains et en y séjournant la durée appropriée. Le traitement chimique est effectué en continu immédiatement après le bombardement ou après un certain délai de repos ou de stockage.

Par exemple, la bande de matériau 2 est entraînée dans le dispositif d'irradiation 4 à une vitesse linéaire comprise entre 0,01 mètre par seconde et 5 mètres par seconde, notamment égale ou voisine (voire supérieure) de 1 mètre par seconde environ.

Les particules 3 utilisées pour le bombardement du matériau 2 sont préférentiellement des ions de gaz rares, notamment, l'Argon, le Krypton, le néon ou encore le Xénon. Des résultats très favorables ont été obtenus avec l'Argon.

Selon l'invention, on dévie, dans le temps, le faisceau de particules accélérées 3 (c'est à dire qu'on fait varier l'orientation relative d'attaque du matériau 2 par le faisceau de particules 3 pris dans son ensemble), ce qui a pour fonction de régulariser la densité des perforations 1 sur la bande de matériau 2. A cet effet, on effectue, avec le faisceau de particules 3, un balayage sinusoïdal transversal, notamment permanent, de la bande de matériau 2. Préférentiellement, l'amplitude du balayage est supérieure à la largeur de la bande de matériau 2 (par exemple égale ou supérieure à deux fois cette largeur) et ceci pour éviter les défauts de linéarité qui résulterait d'un bombardement du matériau 2 en fin de course de balayage. La fréquence de balayage de la bande de matériau 2 avec le faisceau de particules 3 est telle que l'avancement de la bande de matériau 2 pendant une période de balayage du faisceau de particules 3 soit au plus égale et généralement inférieure - et même très inférieure - à la dimension du faisceau de particules 3 dans le sens de défilement de la bande de matériau 2 de manière à bombarder avec les particules 3 une même surface élémentaire de matériau 2 en plusieurs passes successives ce qui a pour effet de régulariser la densité des perforations 1 sur la bande de matériau 2.

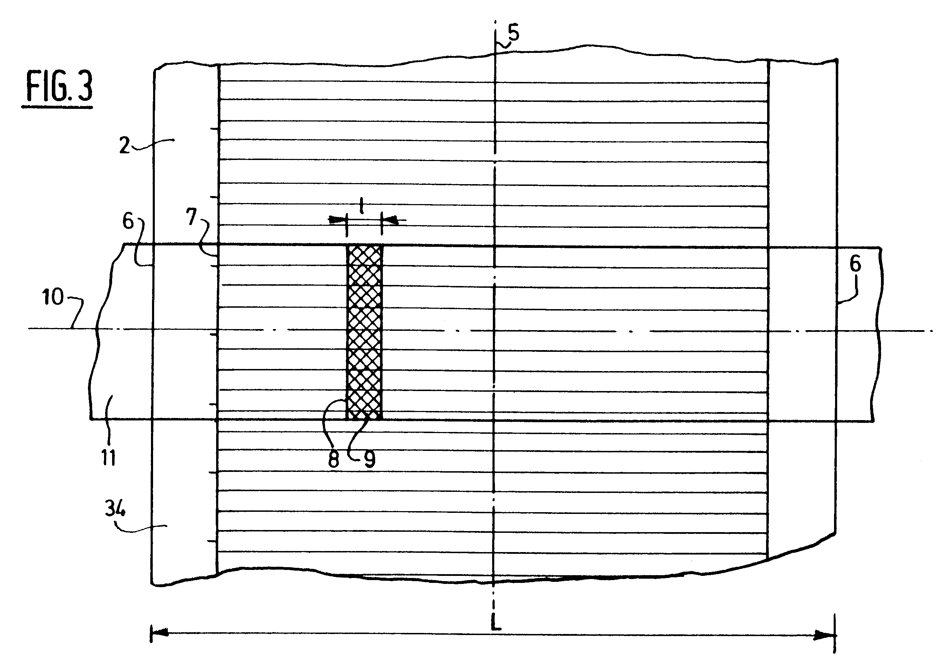

A cet effet, on se réfère, à la figure 3 qui représente un tronçon de bande de matériau 2 ayant un axe longitudinal médian 5 (dans la direction du défilement de la bande) et qui est limitée par deux bords longitudinaux 6. La trace du faisceau de particules 3 sur la bande définit une surface bombardée 7 (représentée doublement hachurée) qui, comme il a été indiqué précédemment, peut être rectangulaire, ses grands côtés 8 étant parallèles à l'axe 5 et ses petits côtés 9 disposés transversalement sur la bande de matériau 2. Ainsi que cela résulte des valeurs données précédemment pour les dimensions, la largeur 1 de la surface bombardée 7 est inférieure, notamment très inférieure, à la largeur L de la bande de matériau 2. Par exemple, 1 est de l'ordre de L/20. Par suite du balayage transversal du faisceau de particules 3, la surface bombardée 7 est déplacée transversalement sur la bande de matériau 2, le long d'un axe médian transversal 10 en définissant une zone de bombardement transversale 11 limitée par les côtés 9. Cette zone de bombardement 11 déborde largement les bords longitudinaux 6 du fait de l'amplitude du balayage par rapport à la largeur de bande de matériau 2 de manière que la bande de matériau 2 soit placée seulement dans la partie médiane de la zone de bombardement 11 là ou le déplacement du faisceau de particules 3 est au moins sensiblement linéaire. Par exemple, la zone de bombardement 11 s'étend sur une amplitude transversale de l'ordre de 40 cm pour une bande de matériau 2 dont la largeur L est de l'ordre de 20 cm. Compte tenu que le balayage du faisceau de particules 3 est nettement plus rapide que la vitesse de défilement de la bande de matériau 2, et du fait de ce qui précède, l'axe médian transversal 10 est sensiblement rectiligne et perpendiculaire à l'axe longitudinal 5. Avec une frequence de balayage de 50 Hz (fréquence électrique du secteur), une vitesse de défilement de bande de matériau 2, lors du bombardement, de l'ordre de 60 cm/sec, et avec les dimensions de la surface bombardée 7 précédemment mentionnées, on réalise un bombardement en plusieurs passes ce qui est propre à régulariser la répartition des impacts des particules 3 sur la bande de matériau 2, donc l'homogénéité des perforations 1 ultérieurement obtenues. Par exemple, une même surface élémentaire de matériau 2 est ainsi bombardée neuf fois environ. Le nombre de passes de bombardement peut faire l'objet de variantes en fonction des différentes valeurs numériques employées. Le balayage étant réalisé par un pivotement sinusoïdal alternatif du faisceau de particules

<div align="center">4</div>

3 dans son ensemble crée d'un bord longitudinal à l'autre de la bande de matériau 2 une variation de l'angle d'impact. Toutefois cette variation est en général très faible et de l'ordre de quelques degrés seulement.

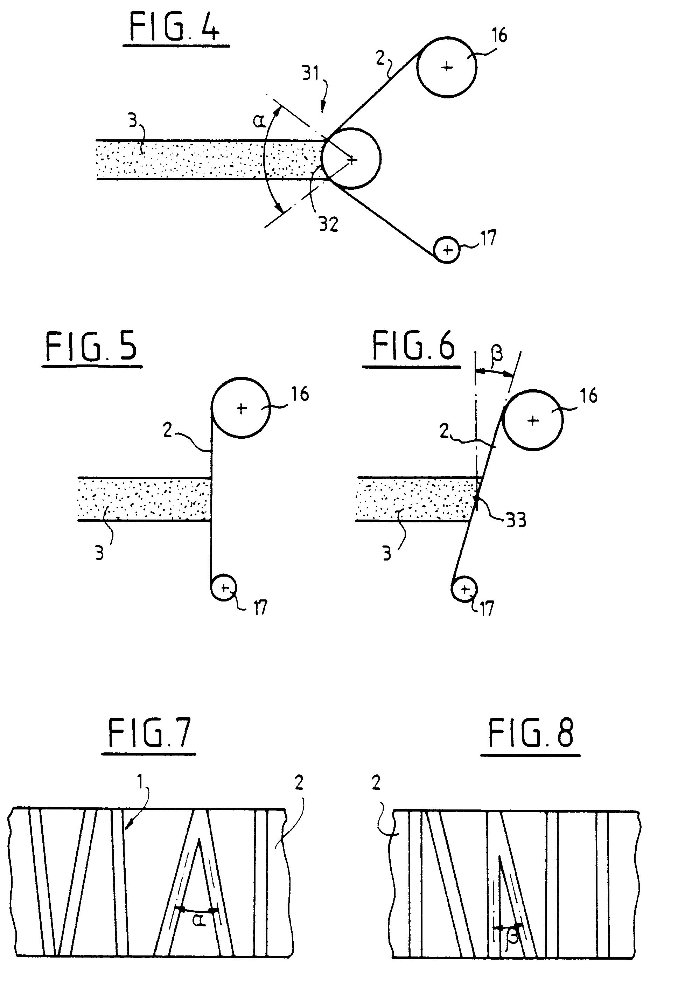

Selon une autre caractéristique de l'invention, on fait varier substantiellement l'angle d'attaque d'une même surface élémentaire de la bande de matériau 2 par les particules 3, de manière que même dans l'hypothèse d'impacts voisins, les trajectoires des particules 3 associées à ces impacts soient suffisamment divergentes et non parallèles (figures 7 et 8) ce qui permet de tendre à éviter la formation de perforations 1 multiples et donc d'affecter la sélectivité du matériau perforé 2, quant à son pouvoir filtrant.

La variation de l'angle d'attaque est déterminée en fonction de l'épaisseur E du matériau 2 à traiter et du diamètre D des perforations 1 à réaliser. Plus l'épaisseur E du matériau 2 est importante, plus la variation de l'angle d'attaque peut être faible. Plus le diamètre D des perforations 1 est important, plus la variation de l'angle d'attaque doit être importante. Selon une première approche, la variation d'angle (ou la tangente de l'angle) est sensiblement proportionnelle à D et inversement proportionnelle à E. Ainsi, pour un matériau 2 de l'ordre de 10 microns d'épaisseur et des perforations 1 de l'ordre de 17 000 Å de diamètre, la variation de l'angle d'attaque est de l'ordre de 10°. En général et éventuellement sauf dans le cas d'un matériau 2 très mince avec des perforations 1 de très petit diamètre, la variation de l'angle d'attaque est d'un ordre de grandeur très différent (par exemple dix fois plus grand) que la variation de l'angle d'attaque résultant du balayage, qui est donc insuffisant à lui seul pour prévenir les perforations 1 multiples.

Dans une première variante possible, on dispose la bande de matériau 2 de manière que dans la zone de bombardement 11 elle soit incurvée, notamment suffisamment incurvée, et non plane. Cette variante permet l'emploi d'un faisceau de particules 3 très intense, avec une très faible probabilité de réaliser des doubles ou des triples perforations. Par exemple, la zone de bombardement 11 est incurvée de façon cylindrique à axe transversal à convexité tournée vers le faisceau de particules 3.

Dans une seconde variante possible, la bande de matériau 2 est plane - ou sensiblement plane - dans la zone de bombardement 11 et on réalise pour une même surface élémentaire du matériau 2 un bombardement en plusieurs passes successives, chacune peu intense, et avec des angles d'attaque suffisamment différents. Par exemple on incline la bande de matériau 2 sur le faisceau de particules 3 sous des angles différents successifs et ceci pour une même surface de matériau 2. Ces passes successives peuvent correspondre éventuellement aux passes ou à des groupes de passes successives résultant du balayage précédemment mentionné.

Selon une variante de mise en oeuvre de l'invention, préférentielle, on soumet la bande de matériau 2, une fois bombardée ainsi qu'il est décrit ci-dessus et avant le traitement chimique décrit ci-dessous, à un traitement UV. Ce traitement UV est préférentiellement combiné à un refroidissement du matériau bombardé 2. Ce refroidissement est réalisé, par exemple, par une énergique ventilation de la bande de matériau 2. Il a été constaté, de façon surprenante, d'une part que l'exposition de la bande de matériau 2 bombardée aux UV a pour effet de régulariser la forme des perforations 1 afin qu'en coupe axiale elles aient une forme cylindrique plutôt qu'une forme de "diabolo" et, simultanément d'abaisser la durée nécessaire à la réalisation des perforations 1 ; et, d'autre part, que le refroidissement de la bande de matériau 2 pendant son exposition aux UV a pour effet d'abaisser la durée nécessaire à la réalisation des perforations 1 lors du traitement chimique. Ainsi, on a utilisé des bandes en PETP de 25 microns d'épaisseur, bombardées avec un faisceau d'ions argon (9 +) d'une énergie de 120 Mev et d'une intensité de 190 nano ampères et traitées ultérieurement avec un bain d'attaque chimique comprenant 15 grammes d'hydroxyde de sodium, 30 grammes de méthanol et 70 ml d'eau à 40°C. Les durées comparatives nécessaires à la réalisation des perforations sont mentionées dans le tableau ci-dessous qui illustre le rôle positif du traitement UV et du refroidissement concomitant.

| | Bombardement puis attaque chimique | Traitement UV complémentaire intermédiaire | |
|---|---|---|---|
| | | seul (pendant une heure) | avec refroidissement énergique |
| Durée nécessaire au percement | 20 minutes | 13 minutes | 10 minutes |

Pour permettre un traitement en continu de la bande de matériau 2, on traite chimiquement le matériau 2 au moyen d'une solution de produit d'attaque dans un solvant organique. Par exemple, l'emploi d'une solution de soude comme produit d'attaque dans le méthanol comme solvant permet une vitesse d'attaque de l'ordre de dix fois supérieure à celle d'une solution aqueuse de soude telle que celle utilisée jusqu'à présent, et ceci dans le cas où le matériau 2 est du polycarbonate ou similaire. La durée du traitement d'attaque peut alors être comprise, par exemple, entre 30 secondes et 2 minutes selon le diamètre des perforations 1 à réaliser. Le traitement chimique peut être réalisé soit de façon statique, la totalité d'une longueur de bande de matériau 2 trempant au repos, pendant la durée nécessaire, dans un bain de traitement; soit de façon dynamique, la bande de matériau 2 défilant dans le bain. Cette caractéristique de l'invention permet notamment d'éviter soit de stocker de la bande de matériau 2 de façon excessive, soit une installation coûteuse de traitement chimique.

Différents solvants organiques peuvent être envisagés notamment l'éthanol, l'isopropanol et préférentiellement le méthanol. Le produit d'attaque peut être, de façon connue en soi, de l'hydroxyde de sodium ou de potassium. La concentration de produit d'attaque dans le solvant organique peut être comprise entre 1 % et 50 % en poids environ et préférentiellement égale ou voisine de 5 % environ. La température du bain d'attaque peut varier entre 20°C et 60°C environ, préférentiellement entre 50°C et 60°C environ.

L'emploi d'un tel solvant organique pour une bande de polycarbonate permet d'atteindre une durée de traitement chimique inférieure à quelques minutes dans les conditions de température mentionnées ci-dessus, avec une excellente qualité de perforations. Cette durée est compatible avec un traitement dynamique par défilement de la bande de matériau 2 dans un bac de produit d'attaque.

Le traitement d'attaque peut être suivi, de façon connue en soi, d'un second traitement de neutralisation (par exemple dans un bain d'acide acétique si le traitement initial est réalisé au moyen d'une base forte), puis d'un rinçage et enfin d'un séchage.

L'invention concerne également un dispositif d'irradiation 4 destiné à être combiné à un cyclotron isochrone (non représenté) placé en amont, pour la mise en oeuvre du procédé qui vient d'être décrit.

Les caractéristiques principales d'un tel cyclotron isochrone sont connues de l'homme du métier et pour cette raison ne sont pas rappelées ici en détail ne constituant d'ailleurs pas, en soi, l'invention. Seuls les perfectionnements spécifiques au dispositif d'irradiation 4 associé et permettant la mise en oeuvre optimale du procédé sont décrits.

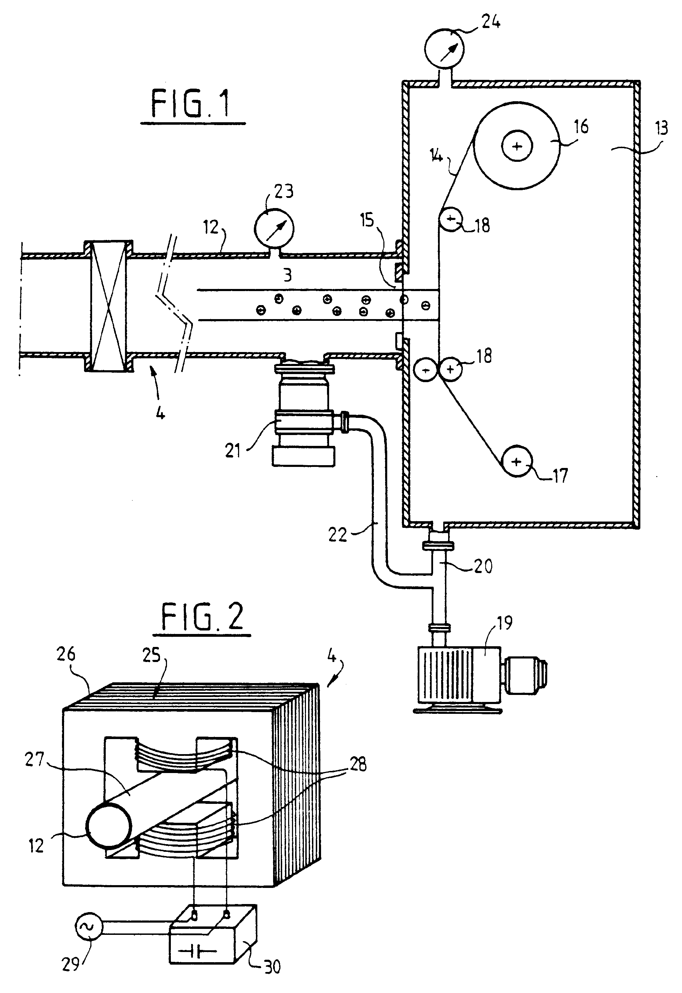

On se réfère à la figure 1 sur laquelle est représentée la partie extrême terminale de l'enceinte à haut vide 12 du dispositif d'irradiation 4, dans laquelle circule et est canalisé le faisceau de particules 3. L'enceinte est placée en sortie du cyclotron isochrone et a une forme générale cylindrique, connue en soi.

Selon l'invention, à l'extrémité aval de l'enceinte 12 est associé rigidement un caisson 13 étanche à l'air, dans lequel est logé un dérouleur 14 pour la bande de matériau 2. Un diaphragme 15 apte d'une part à ne pas ralentir substantiellement la vitesse des particules 3, d'autre part à ne pas modifier substantiellement leurs trajectoires sépare l'un de l'autre l'enceinte 12 et le caisson 13, à l'endroit d'ouvertures respectives de leurs parois venant en correspondance.

Le caisson 13 est placé contre l'extrémité aval de l'enceinte 12 et dans le prolongement de celle-ci. Le caisson 13 comporte une porte d'accès non représentée avec joint d'étanchéité à l'air et également un hublot permettant de contrôler visuellement le bon fonctionnement du dérouleur 14.

Le dérouleur 14 comporte une bobine 16 de bande de matériau 2 non bombardé, un mandrin 17 d'enroulement de la bande de matériau 2 bombardé et donc comportant des traces d'endommagement, des rouleaux de renvoi 18 et des moyens d'entraînement (non représentés) à défilement de la bande de matériau 2, notamment à vitesse constante.

Une pompe à vide primaire 19 est associée au caisson étanche 13 par une conduite 20 et à une pompe à vide secondaire 21 par une dérivation 22 branchée sur la conduite 20, la pompe à vide secondaire 21 étant elle-même associée à l'enceinte à haut vide 12. Cette disposition est telle que le vide dans le caisson étanche 13 est moins poussé que celui régnant dans l'enceinte 12, sans que, pour autant, la pression différentielle exercée sur le diaphragme 15 ne soit trop importante et surtout que le comportement des particules 3 ne soit substantiellement affecté. Par exemple, le vide dans l'enceinte 12 est inférieur à $10^{-6}$ mm de mercure tandis que le vide dans le caisson 13 est de l'ordre de $10^{-2}$ mm de mercure. Le diaphragme 15 est placé à proximité immédiate de la bande de matériau 2 - par exemple à quelques centimètres - de manière que ni le diaphragme 15, ni le vide moins poussé régnant dans le caisson 13, et plus précisément sur la faible distance qui sépare le diaphragme 11 de la zone de bombardement 11 en regard de la bande de matériau 2, n'affecte substantiellement le faisceau de particules 3 en puissance ou en direction. L'existence d'un vide moins poussé dans le caisson étanche 13 permet de diminuer considérablement la durée d'établissement du vide dans ce caisson 13 et donc de faciliter la mise en oeuvre industrielle du procédé, notamment lors de la mise en place et de l'enlèvement de la bande de matériau 2 respectivement dans et depuis le caisson 13, ce qui implique d'ouvrir sa porte d'accès et donc de casser le vide dans le caisson 13.

Le diaphragme 15 est préférentiellement réalisé sous la forme d'un film métallique ou autre c'est à dire en un matériau mécaniquement résistant et non susceptible d'être fortement endommagé par le bombardement de particules 3, notament en aluminium très pur de 8 à 12 microns d'épaisseur environ (par exemple d'épaisseur égale ou voisine de 10 microns). Compte tenu de cette épaisseur, et de la nature du matériau constituant le diaphragme 15, la différence de pression entre les deux faces du diaphragme 15 doit rester inférieure à 10 millibars environ pour éviter la détérioration mécanique du diaphragme 15. Des moyens de mesure de contrôle et de régulation du vide 23, 24 peuvent être prévus respectivement tant sur l'enceinte 12 que sur le caisson 13.

Le dispositif d'irradiation 4 selon l'invention (figure 2) comporte des moyens 25 pour dévier dans le temps, notamment en permanence, le faisceau de particules 3 dans son ensemble, et réaliser ainsi un balayage transversal de la bande de matériau 2 avec le faisceau de particules 3. Ces moyens 25 sont constitués, par exemple, par un déflecteur magnétique interposé sur l'enceinte 12, suffisamment éloigné du diaphagme 15. Les pièces magnétiques 26 du déflecteur magnétique 25 sont en acier feuilleté, dans l'entrefer 27 desquelles passe l'enceinte à haut vide 12. Les bobinages 28 associés aux pièces magnétiques 26 sont branchés sur une source de courant alternatif 29 via un banc de condensateur de puissance 30 pour compenser la puissance réactive importante requise par un tel électroaimant 26, 28. L'enceinte à haut vide 5 est réalisée, au moins au droit du déflecteur magnétique 25 en un matériau électriquement isolant pour éviter toute perturbation et notamment est réalisée en verre minéral ou organique ou tout matériau similaire.

Les moyens 25 permettent de dévier en permanence le faisceau de particules 3 dans son ensemble en réalisant un balayage sinusoïdal transversal de la bande de matériau 2. L'amplitude du balayage peut être comprise entre 40 cm et 60 cm environ; la fréquence de balayage peut être égale ou de l'ordre de 50 Hz; la bande de matériau 2 peut avoir une largeur de 20 cm environ et une vitesse de défilement de l'ordre de 1 mètre par seconde.

Les moyens 25 sont congrus de manière qu'une même surface élémentaire de la bande de matériau 2 à bombarder soit traitée en plusieurs passes successives grâce à des balayages successifs. L'angle de balayage peut avoir une amplitude angulaire de l'ordre de quelques degrés, par exemple comprise entre 3° et 10° environ. Afin d'assurer une longueur d'amplitude de balayage suffisante tout en évitant une amplitude angulaire excessive, les moyens 25 sont suffisamment écartés de la bande de matériau 2. Par exemple, l'enceinte 12 a une forme générale cylindrique de diamètre de l'ordre de 20 cm et les moyens 25 sont écartés de plusieurs mètres -notamment de l'ordre de 2 à 6 mètres- du diaphragme 15 et donc du matériau 2.

Le dispositif d'irradiation 4 selon l'invention comporte également des moyens 31 pour faire varier substantiellement l'angle d'attaque d'une même surface élémentaire du matériau 2 par les particules 3, par exemple de l'ordre d'une dizaine de degrés. Comme indiqué précédemment, la mise en oeuvre des moyens 31 permet d'éviter ou de diminuer le risque de réalisation de perforations multiples, notamment doubles ou triples.

Les moyens 31 peuvent faire l'objet de plusieurs variantes de réalisation. Dans une première variante (figure 4) la bande de matériau 2 est conformée de façon incurvée dans la zone de bombardement 11 grâce, par exemple, à une surface d'appui incurvée 32 constituée notamment par un rouleau d'axe transversal sur un arc duquel est appliqué le matériau 2. Le rayon de courbure de la surface 32 est suffisamment petit pour que d'un bord transversal extrême à l'autre de la zone de bombardement 11, la variation de l'angle d'attaque du matériau 2 par les particules 3 soit significatif et par exemple de l'ordre de plusieurs dizaines de degrés. La zone de bombardement 11 forme un arc cylindrique d'ouverture $\alpha$. Eventuellement la valeur a est telle que les perforations 1 restent voisines d'une direction perpendiculaire à la bande de matériau 2. Cette première variante de réalisation autorise l'emploi d'un faisceau de particules 3 intense. Par exemple, le rouleau constituant la surface d'appui incurvé 39 peut avoir un diamètre de l'ordre de 6 à 10 cm, notamment égal ou voisin de 8 cm, et l'angle a compris notamment entre 50° et 90° environ. Plus précisément, pour une bande de matériau 2 de 25 microns d'épaisseur, en polycarbonate et des perforations 1 envisagées d'un diamètre de 1 micron, le diamètre du rouleau est compris entre 6 cm et 7,5 cm pour une vitesse de défilement de la bande de matériau 2 de 64 cm/s. On a constaté que ces valeurs donnent un nombre minimum de double et de triple perforation et la longueur des traces d'endommagement varie de 101 entre celle qui est la plus longue et celle qui est la plus courte.

Dans une seconde variante (figures 5 et 6) la bande de matériau 2 est plane - ou substantiellement plane - dans la zone de bombardement 11 et l'angle relatif d'attaque de la bande de matériau 2 par le faisceau de particules 3 varie dans le temps, le bombardement étant réalisé sur une même surface élémentaire du matériau 2 en au moins deux passes selon deux angles suffisamment différents, successivement. Les deux passes concernent en tout ou en partie une même surface élémentaire de matériau 2, grâce notamment au balayage à recouvrement. A cet effet, il est prévu par exemple que le dérouleur 14 soit monté pivotant dans son ensemble autour d'un axe, notamment transversal 33 par rapport à la bande de matériau 2, entre deux positions extrêmes inclinées l'une par rapport à l'autre d'un angle β, des moyens d'entrainement (non représentés) tels qu'un moteur permettant de faire passer le dérouleur 14 de l'une à l'autre de ses positions extrêmes. Par exemple, une première position extême (figure 5) correspond à une attaque perpendiculaire du matériau 2 par les particules 3 et une seconde position extrême (figure 6) à une attaque selon un angle de l'ordre de 60°.

Le dispositif d'irradiation 9 est associé avec des moyens de traitement chimique placés en aval. En variante et préférentiellement, entre le dispositif d'irradiation 4 et les moyens de traitement chimique sont interposés des moyens d'exposition de la bande de matériau 2 aux UV combinés, le cas échéant mais préférentiellement à des moyens de refroidissement tels que des moyens de ventilation.

L'invention concerne enfin le matériau 2 comportant des perforations 1 réalisé grâce au procédé qui vient d'être décrit.

Le matériau 2 est préférentiellement une matière synthétique notamment polymère choisie parmi les polyesters notamment le polyéthylène téréphtalate, les polycarbonates notamment le polycarbonate de bisphénol-A, les polyéthers aromatiques (polyéthers sulfones, polyéthers cétones), les polysulfones et les polyoléfines (polyéthylène, polypropylène, chlorure de polyvinyle, polyfluorure de vinylidiène), les acétates et nitrates de cellulose.

Les essais réalisés montrent que la qualité des perforations 1 obtenues peut dépendre du matériau 2 employé sans pour autant que le procédé selon l'invention ne soit remis en question dans son principe ou ses modalités. Ainsi, deux essais ont été réalisés avec des films polycarbonates de deux origines différentes, respectivement de marques LEXAN (General Electric) -test n°1- et MAKROFOL N (Bayer) -test n°2-. Les deux films ont été traités (bombardement puis attaque chimique) de façon similaire. Après traitement, les deux faces (A et B) de chacun des deux films ont été examinées par microscopie à balayage. Les deux faces A et B du film du test n° 1 sont semblables quant au nombre et à la dimension des perforations 1. Au contraire les deux faces A et B du film du test n° 2 sont dissemblables, l'une (face A) comprenant beaucoup plus de perforations 1 de plus grand diamètre que l'autre (face B) comprenant moins de perforations 1 et de plus petit diamètre.

Le matériau 2 peut être présenté en bande flexible dont l'épaisseur peut varier entre quelques microns et plus de 100 microns, la largeur de la bande pouvant varier de 5 cm à 150 cm environ. Les perforations 1 réalisées peuvent avoir une densité par cm² allant jusqu'à $10^{11}$, les dimensions des perforations 1 étant comprises entre 100 Å et 100 000 Å.

Les perforations 1 traversent, en général, le matériau 2 de part en part, étant de type débouchant ce qui correspond principalement à une fonction tamis ou filtration du matériau 2 ainsi perforé. Les perforations 1 sont distribuées de façon aléatoire selon les configurations successives du faisceau de particules 3. Grâce au balayage à recouvrement précédemment décrit, la répartition des perforations 1 présente une bonne homogénéité sur toute la surface de la bande de matériau 2.

La variation de l'angle d'attaque du matériau 2 par les particules 3 permet permet d'éviter des perforations 1 doubles ou triples. Lorsque deux impacts sont voisins, ce qui peut arriver, bien que déjà peu probable, il est en effet presque impossible que les deux traces respectives soient parallèles. Très certainement elles sont divergentes, ce qui n'affecte donc pas la sélectivité du matériau 2 comportant les perforations 1 en ce qui concerne son pouvoir filtrant.

Selon une variante possible, la bande de matériau 2 comporte deux lisières longitudinales 34 dépourvues de perforations 1. Ces lisières 34 peuvent avoir comme fonction d'assurer une certaine tenue mécanique de la bande de matériau 2. Par exemple, elles peuvent avoir chacune une largeur de l'ordre de 20 mm pour une bande de matériau 2 de 20 cm de largeur. Eventuellement, la bande de matériau 2 comporte une ou plusieurs autres bandes ou surfaces dépourvues de perforation 1 s'étendant dans le sens longitudinal de la bande ou inclinées sur celui-ci ou placées différemment. A cet effet, il est interposé sur le faisceau de particules 3 des caches correspondant aux lisières, bandes surfaces prévues. Ces caches sont par exemple placés dans et portés par le caisson 13 ou situés entre le caisson 13 et l'enceinte à haut vide 12. Le matériau constituant ces caches arrête les particules 3, du fait de sa nature et de son épaisseur, appropriées. Par exemple un cache est réalisé en acier de quelques millimètres d'épaisseur. En variante, les caches sont constitués par la paroi même du caisson 13 dans laquelle est ménagée une ouverture qui est fermée par le diaphragme 15.

**Revendications**

1. Procédé de réalisation de perforations (1) dans un matériau solide en feuille dans lequel on bombarde d'abord le matériau (2) avec des ions lourds (3) fortement ionisés au moyen d'un dispositif d'irradiation afin d'obtenir des traces d'endommagement du matériau (2) dans son épaisseur et on attaque ensuite sélectivement le matériau (2) ainsi bombardé le long des traces d'endommagement afin d'obtenir des perforations (1) caractérisé par le fait que : on met en oeuvre un cyclotron isochrone combiné au dispositif d'irradiation et placé en amont et un faisceau d'ions ayant une énergie de l'ordre de 2 MeV par nucléon et une intensité comprise entre $10^6$ et $10^{13}$ ions par seconde ; on dévie le faisceau d'ions (3) bombardant le matériau (2) ; et on fait défiler le matériau (2).

2. Procédé selon la revendication 1, caractérisé par le fait qu'on soumet le matériau (2) à une exposition au rayonnement UV, après le bombardement d'ions lourds (3) et avant l'attaque sélective constituant en un traitement chimique, ce traitement UV ayant pour effet d'une part de régulariser la forme cylindrique des perforations (1) et, d'autre part, d'abaisser la durée nécessaire à leur réalisation.

3. Procédé selon la revendication 2, caractérisé par le fait qu'on soumet le matériau (2) simultanément à un rayonnement UV et à un refroidissement, ce refroidissement ayant pour effet d'abaisser la durée nécessaire à la réalisation des perforations (1).

4. Procédé selon la revendication 3, caractérisé en ce que le refroidissement du matériau (2) réalisé par ventilation.

5. Procédé selon l'une quelconque des revendications 1 à 4, caractérisé par le fait qu'on travaille en continu, la feuille de matériau (2) formant une bande défilant dans le dispositif.

6. Procédé selon la revendication 5, caractérisé par le fait qu'on entraîne la bande de matériau (2) dans le dispositif d'irradiation (4) à une vitesse linéaire, notamment constante, comprise entre 0,01 et 5 mètres par seconde, notamment égale ou voisine de 1 mètre par seconde environ.

7. Procédé selon l'une quelconque des revendications 1 à 6, caractérisé par le fait que les ions (3) pour le bombardement du matériau (2) sont des ions de gaz rares notamment l'Argon, le Krypton ou le Néon, le Xénon.

8. Procédé selon l'une quelconque des revendications 1 à 7, caractérisé par le fait que la déviation du faisceau d'ions (3) dans le temps a pour effet de balayer transversalement la bande de matériau (2) ce qui a pour fonction de régulariser la densité des perforations (1) sur le matériau (2).

9. Procédé selon la revendication 8, caractérisé par le fait qu'on dévie le faisceau de particules (3) avec une amplitude nettement supérieure à la largeur de la bande de matériau (2).

10. Procédé selon l'une quelconque des revendications 8 et 9, caractérisé par le fait que la déviation du faisceau d'ions (3) à une fréquence telle que l'avancement de la bande de matériau (2) pendant une période de balayage soit inférieure à la dimension du faisceau d'ions (3) dans le sens du défilement de la bande de matériau (2), de manière à bombarder une même surface élémentaire de matériau (2) en plusieurs passes successives.

11. Procédé selon l'une quelconque des revendications 1 à 10, caractérisé par le fait qu'on fait varier substantiellement l'angle d'attaque d'une même surface élémentaire de matériau (2) par les ions (3), notamment de l'ordre d'une dizaine de degrés ou plus ce qui a pour fonction de tendre à éviter la réalisation de perforations multiples doubles ou triples.

12. Procédé selon la revendication 11, caractérisé par le fait que pour faire varier l'angle d'attaque du matériau (2) par les ions (3) on place le matériau (2) de façon qu'il soit incurvé dans sa zone de bombardement (11).

13. Procédé selon l'une quelconque des revendications 11 et 12, caractérisé par le fait que pour faire varier l'angle d'attaque du matériau (2) par les ions (3), on réalise le bombardement d'une même surface élémentaire d'un matériau (2) en plusieurs passes successives selon au moins deux angles d'attaque différents.

14. Procédé selon l'une quelconque des revendications 1 à 13, caractérisé par le fait qu'on attaque sélectivement le matériau bombardé par un traitement chimique du matériau (2) au moyen d'une solution de produit d'attaque dans un solvant organique.

**EP 0 262 187 B1**

15. Procédé selon la revendication 14, caractérisé par le fait qu'on utilise comme solvant organique un alcool, notamment l'éthanol, lisopropanol et, préférentiellement, le méthanol.

16. Procédé selon l'une quelconque des revendications 14 et 15, caractérisé par le fait qu'on utilise comme produit d'attaque une base forte, notamment de l'hydroxyde de sodium ou de potassium.

17. Dispositif pour la réalisation de perforations dans un matériau solide en feuille comprenant un dispositif d'irradiation ; une enceinte à vide dans laquelle est logé le matériau caractérisé par le fait qu'au dispositif d'irradiation est combiné un cyclotron isochrone placé en amont, lequel permet un bombardement d'ions lourds de l'ordre de 2 MeV par nucléon et avec une intensité comprise entre $10^6$ et $10^{13}$ ions par seconde ;à l'enceinte à haut vide (12) est associé un caisson étanche (13); un diaphragme (15) apte à ne pas ralentir substantiellement la vitesse des ions séparant l'enceinte (12) et le caisson (13) ; un dérouleur (14) du matériau (2) est logé dans le caisson (13) ; et il comprend des moyens (25) pour dévier le faisceau d'ions (3).

18. Dispositif selon la revendication 17, caractérisé par le fait qu'il comporte une pompe à vide primaire (19) associée au caisson (13) et une pompe à vide secondaire (21) associé à l'enceinte (12) de manière que le vide dans le caisson (13) soit moins poussé que celui régnant dans l'enceinte (12), sans que, pour autant, la pression différentielle exercée sur le diaphragme (15) ne soit trop importante.

19. Disposition selon l'une quelconque des revendications 17 et 18 caractérisé par le fait que le diaphragme (15) est un film métallique ou autre en un matériau mécaniquement résistant et non susceptible d'être fortement endommagé par le bombardement de particules (3), notamment en aluminium d'épaisseur comprise notamment entre 8 et 12 microns.

20. Dispositif selon l'une quelconque des revendications 17 à 19, caractérisé par le fait que le vide régnant dans le caisson (13) est de l'ordre de $10^{-2}$ mm de mercure tandis que le vide régnant dans l'enceinte (12) est de l'ordre de $10^{-6}$ mm de mercure.

21. Dispositif selon l'une quelconque des revendications 17 à 20, caractérisé par le fait que les moyens (25) pour dévier dans le temps le faisceau d'ions (3) assurent un balayage transversal de la bande de matériau (2) avec le faisceau d'ions (3).

22. Dispositif selon l'une quelconque des revendications 17 à 21, caractérisé par le fait que les moyens pour dévier le faisceau d'ions (25) sont un déflecteur magnétique.

23. Dispositif selon la revendication 22, caractérisé par le fait que le déflecteur magnétique (25) comporte un électroaimant (26, 28) alimenté à partir d'une source de courant alternatif (29), les pièces magnétiques (26) de l'électroaimant étant en acier feuilleté et l'enceinte (12) placée dans l'entrefer (27) étant réalisée en un matériau électriquement isolant.

24. Dispositif selon l'une quelconque des revendications 17 à 23, caractérisé par le fait qu'il comporte en outre des moyens (31) pour faire varier substantiellement l'angle d'attaque des ions (3) sur une même surface élémentaires du matériau (2).

25. Dispositif selon la revendication 24, caractérisé par le fait que les moyens (31) comprennent une surface d'appui incurvée (32) du matériau (2) dans la zone de bombardement (11).

26. Dispositif selon la revendication 25, caractérisé par le fait que la zone de bombardement (11) du matériau (2) est montée mobile entre deux positions extrêmes, des moyens d'entraînement permettant de la faire passer de l'une à l'autre de ses positions, de manière à faire varier l'angle d'attaque.

27. Dispositif selon l'une quelconque des revendications 17 à 26, caractérisé par le fait qu'il comporte en outre un ou plusieurs caches en un matériau de nature et d'épaisseur propres à arrêter les ions (3) afin de réaliser sur la bande de matériau (2) des lisières ou bandes ou surfaces (34) dépourvues de perforations (1).

**Patentansprüche**

1. Verfahren zur Herstellung von Perforationen (1) in festem, blechförmigem Material (2) durch schwere Ionen (3), die mit Hilfe einer Bestrahlungsvorrichtung stark ionisiert wurden, um Spuren der Beschädigung über die ganze Stärke des Materials (2) zu erzielen, worauf das so mit Ionen beschossene Material gezielt die Beschädigungsspuren entlang in Angriff genommen wird, um Perforationen (1) zu erhalten, dadurch gekennzeichnet, daß ein isochroner Zyklotron in Verbindung mit der Bestrahlungsvorrichtung kombiniert und davor aufgestellt wird, der einen Ionenstrahl mit einer Energie von ca. 2 MeV pro Nukleon bei einer Intensität zwischen $10^6$ und $10^{13}$ Ionen pro Sekunde erzeugt, wobei der das Material (2) beschießende Ionenstrahl (3) abgelenkt und das Material (2) davor vorbeigeführt wird.

2. Verfahren nach Patentanspruch 1, dadurch gekennzeichnet, daß das Material (2) nach dem Beschuß durch schwere Ionen (3) und vor der gezielten Inangriffnahme durch chemische Behandlung einer UV-Bestrahlung ausgesetzt wird, wodurch einerseits die zylindrische Ausbildung der Perforationen (1) regelmäßiger und andererseits die zu ihrer Herstellung erforderliche Zeit verkürzt wird.

10

EP 0 262 187 B1

3. Verfahren nach Patentanspruch 2, dadurch gekennzeichnet, daß das Material (2) gleichzeitig einer UV-Bestrahlung und einer Abkühlung ausgesetzt wird, wodurch diese Abkühlung die zur Herstellung der Perforationen (1) erforderliche Zeit verkürzt wird.

4. Verfahren nach Patentanspruch 3, dadurch gekennzeichnet, daß die Abkühlung des Materials (2) durch Ventilation erfolgt.

5. Verfahren nach einem beliebigen der Patentansprüche 1 bis 4, dadurch gekennzeichnet, daß die Bearbeitung ohne Unterbrechung erfolgt, wobei das Material (2) bandförmig ausgelegt ist und vor der Vorrichtung vorbeigeführt wird.

6. Verfahren nach Patentanspruch 5, dadurch gekennzeichnet, daß das bandförmige Material (2) bei einer linearen, weitgehend konstanten Geschwindigkeit zwischen 0,01 und 5 Meter pro Sekunde, insbesondere im Geschwindigkeitsbereich von annähernd 1 Meter pro Sekunde in der Bestrahlungsvorrichtung (4) durchgeführt wird.

7. Verfahren nach einem beliebigen der Patentansprüche 1 bis 6, dadurch gekennzeichnet, daß es sich bei den zum Beschuß des Materials (2) verwendeten Ionen (3) um Ionen seltener Gase, insbesondere Argon-, Krypton-, Neon- oder Xenon-Ionen handelt.

8. Verfahren nach einem beliebigen der Patentansprüche 1 bis 7, dadurch gekennzeichnet, daß durch die Ablenkung des Ionenstrahls (3) in der Zeit das bandförmige Material (2) quer zur Bandbreite bestrahlt wird, wodurch die Perforationen (1) in dem Material (2) in regelmäßiger Dichte erzeugt werden.

9. Verfahren nach Patentanspruch 8, dadurch gekennzeichnet, daß die Amplitude der Ablenkung des Ionenstrahls (3) deutlich über der Breite des bandförmigen Materials (2) liegt.

10. Verfahren nach einem beliebigen der Patentansprüche 8 und 9, dadurch gekennzeichnet, daß die Ablenkungen des Ionenstrahls (3) mit einer Frequenz erfolgt, bei der die Distanz des vorrückenden bandförmigen Materials (2) während eines Ablenkzyklusses geringer ist als die der Breite des Ionenstrahls (3) in Richtung des vorrückenden Materialbandes (2), sodaß ein und dieselbe Elementarfläche des Materials (2) mehrere Male von dem vorbeischwenkenden Ionenstrahl (3) beschossen wird.

11. Verfahren nach einem beliebigen der Patentansprüche 1 bis 10, dadurch gekennzeichnet, daß der Auftreffwinkel des Ionenstrahls (3) auf ein und dieselbe Elementarfläche des Materials (2) wesentlich geändert wird, insbesondere um ca. 10° oder mehr, wodurch die Bildung zahlreicher Zwei- und Dreifachperforationen vermieden werden soll.

12. Verfahren nach Patentanspruch 11, dadurch gekennzeichnet, daß die Änderung des Auftreffwinkels des Ionenstrahles (3) auf die Elementarfläche des Materials (2) dadurch bewirkt wird, daß letzteres gekrümmt in den Bereich des Beschusses (11) eingeführt wird.

13. Verfahren nach einem beliebigen der Patentansprüche 11 und 12, dadurch gekennzeichnet, daß zur Änderung des Auftreffwinkels des Ionenstrahles (2) auf das Material (2) der Ionenbeschuß ein und derselben Elementarfläche des Materials in mehreren aufeinanderfolgenden Zyklen mit mindestens zwei unterschiedlichen Auftreffwinkeln erfolgt.

14. Verfahren nach einem beliebigen der Patentansprüche 1 bis 13, dadurch gekennzeichnet, daß die gezielte Inangriffnahme des zuvor mit Ionen beschossenen Materials durch chemische Behandlung in Form einer Lösung eines angreifenden Produktes in einem organischen Lösungsmittel erfolgt.

15. Verfahren nach Patentanspruch 14, dadurch gekennzeichnet, daß als organisches Lösungsmittel ein Alkohol, insbesondere Ethanol, Lisopropanol und bevorzugt Methanol verwendet wird.

16. Verfahren nach einem beliebigen der Patentansprüche 14 und 15, dadurch gekennzeichnet, daß als angreifendes Produkt eine starke Lauge, insbesondere Natrium- oder Kaliumhydroxyd verwendet wird.

17. Vorrichtung zur Herstellung von Perforationen in einem soliden, blechförmigen Material, bestehend aus einer Bestrahlungsvorrichtung und einem Vakuumrohr, in dem das Material gelagert wird, dadurch gekennzeichnet, daß ein isochroner Zyklotron in Verbindung mit der Bestrahlungsvorrichtung kombiniert und davor aufgestellt wird, der einen Ionenstrahl mit einer Energie von ca. 2 MeV pro Nukleon bei einer Intensität zwischen $10^6$ und $10^{13}$ Ionen pro Sekunde erzeugt, das Rohr (12) für hohes Vakuum mit einem luftdichten Behälter (13) verbunden ist, eine Blende (15), durch die die Geschwindigkeit der Ionen nicht wesentlich beeinträchtigt wird, den Behälter (23) vom Rohr (12) trennt, eine Abrollvorrichtung (14) für das bandförmige Material (2) in dem Behälter (13) untergebracht ist und Mittel (25) zur Ablenkung des Ionenstrahls (3) vorgesehen sind.

18. Vorrichtung nach Patentanspruch 17, dadurch gekennzeichnet, daß sie eine mit dem Behälter (13) verbundene Primär-Vakuumpumpe (19) und eine mit dem Rohr (12) verbundene Sekundär-Vakuumpumpe (21) besitzt, wodurch der Unterdruck im Behälter (13) geringer ist als der im Rohr (12), ohne daß jedoch der auf die Blende (15) einwirkende Druckunterschied zu hoch ist.

19. Vorrichtung nach einem beliebigen der Patentansprüche 17 und 18, dadurch gekennzeichnet, daß die Blende (15) aus einer Folie aus Metall oder einem anderen, mechanisch widerstandsfähigen Material besteht, das durch den Ionenbeschuß nicht wesentlich beeinträchtigt wird, insbesondere aus Aluminium mit einer Stärke

11

zwischen 8 und 12 Mikrometern.

20. Vorrichtung nach einem beliebigen der Patentansprüche 17 bis 19, dadurch gekennzeichnet, daß der Unterdruck in dem Behälter (13) bei ca. $10^{-2}$ mm Quecksilbersäule liegt, während der Unterdruck im Rohr (12) bei ca. $10^{-6}$ mm Quecksilbersäule liegt.

21. Vorrichtung nach einem beliebigen der Patentansprüche 17 bis 20, dadurch gekennzeichnet, daß die Mittel (25) zur Ablenkung des Ionenstrahls (3) in der Zeit ein Abtasten des Materialbandes (2) in dessen Querrichtung durch den Ionenstrahl (3) bewirken.

22. Vorrichtung nach einem beliebigen der Patentansprüche 17 bis 21, dadurch gekennzeichnet, daß die Mittel (25) zur Ablenkung des Ionenstrahls (3) aus einem magnetischen Ablenkgerät bestehen.

23. Vorrichtung nach Patentanspruch 22, dadurch gekennzeichnet, daß das magnetische Ablenkgerät (25) einen über eine Wechselstromquelle (29) gespeisten Elektromagnet (26, 28) besitzt, wobei dessen magnetische Teile (26) aus Eisenblechen und das in dem Eisenspalt (27) liegende Rohr (12) aus einem elektrisch isolierenden Material besteht.

24, Vorrichtung nach einem beliebigen der Patentansprüche 17 bis 23, dadurch gekennzeichnet, daß sie darüberhinaus über Mittel zur wesentlichen Änderung des Auftreffwinkels des Ionenstrahls (3) auf die Elementarfläche des Materials (2) verfügt.

25. Vorrichtung nach Patentanspruch 24, dadurch gekennzeichnet, daß die Mittel (31) eine gekrümmte Auflagefläche (32) für das Material (2) in dem Bereich des Ionenbeschusses (11) aufweisen.

26. Vorrichtung nach Patentanspruch 25, dadurch gekennzeichnet, daß der Bereich des Ionenbeschusses (11) des Materials (2) beweglich zwischen zwei Endpositionen gestaltet ist, wobei der Wechsel von einer Position zur anderen durch betriebe so erfolgt, daß eine Änderung des Auftreffwinkels bewirkt wird.

27. Vorrichtung nach einem beliebigen der Patentansprüche 17 bis 26, dadurch gekennzeichnet, daß sie darüberhinaus über eine oder mehrere Abdeckungen aus einem Material verfügt, dessen Art und Stärke zum Abhalten des Ionenstrahls (3) geeignet ist, um auf dem Materialband (2) Ränder, Streifen oder Flächen (34) zu erhalten, die keine Perforationen aufweisen.

## Claims

1. Method for producing perforations (1) in a solid material in the form of a sheet in which the material (2) is firstly bombarded with highly ionised heavy ions (3) by means of an irradiation device in order to obtain traces of damage of the material (2) in its thickness and subsequently the material (2) thus bombarded is selectively etched along the traces of damage in order to obtain perforations (1) characterised in that: an isochronal cyclotron is employed, combined with the irradiation device, and positioned upstream, and an ion beam having an energy of the order of 2 MeV per nucleon and an intensity of between $10^6$ and $10^{13}$ ions per second; the ion beam (3) bombarding the material (2) is deflected; and the material (2) is caused to progress.

2. Method according to Claim 1, characterised in that the material (2) is subjected to an exposure to UV radiation, after the bombardment of heavy ions (3) and before the selective etching, constituting a chemical treatment, this UV treatment having the effect, on the one hand, of making the cylindrical shape of the perforations (1) uniform and, on the other hand, of reducing the duration required for producing them.

3. Method according to Claim 2, characterised in that the material (2) is simultaneously subjected to a UV radiation and to cooling, this cooling having the effect of reducing the duration required for producing the perforations (1).

4. Method according to Claim 3, characterised in that the cooling of the material (2) is produced by ventilation.

5. Method according to any one of Claims 1 to 4, characterised in that the operation is continuous, the sheet of material (2) forming a strip progressing inside the device.

6. Method according to Claim 5, characterised in that the strip of material (2) inside the irradiation device (4) is driven at a linear, and especially constant, rate of between 0.01 and 5 metres per second and especially equal to or in the neighbourhood of approximately 1 metre per second.

7. Method according to any one of Claims 1 to 6, characterised in that the ions (3) for the bombardment of the material (2) are ions of rare gases, especially argon, krypton, neon or xenon.

8. Method according to any one of Claims 1 to 7, characterised in that the deflection of the ion beam (3), with time, has the effect of transversely scanning the strip of material (2) which has the function of making the density of the perforations (1) uniform over the material (2).

9. Method according to Claim 8, characterised in that the beam of particles (3) is deflected with an amplitude distinctly greater than the width of the strip of material (2).

10. Method according to either of Claims 8 and 9, characterised in that the deflection of the ion beam (3) at a frequency such that the advance of the strip of material (2) during a scan period is less than the dimension of the ion beam (3) in the direction of the progress of the strip of material (2), in such a manner as to bombard the same elementary surface of the material (2) in several successive passes.

11. Method according to any of Claims 1 to 10, characterised in that the angle of attack of the same elementary surface of material (2) by the ions (3) is caused to vary substantially, especially by the order of ten degrees or more, which has the function of tending to avoid the production of double or triple multiple perforations.

12. Method according to Claim 11, characterised in that in order to cause the angle of attack of the material (2) by the ions (3) to vary, the material (2) is positioned in such a manner that it is curved in the bombardment zone (11) thereof.

13. Method according to either of Claims 11 and 12, characterised in that in order to cause the angle of attack of the material (2) by the ions (3) to vary, the bombardment of the same elementary surface of a material (2) is carried out in several successive passes along at least two different angles of attack.

14. Method according to any one of Claims 1 to 13, characterised in that the bombarded material is selectively etched by a chemical treatment of the material (2) by means of a solution of etching agent in an organic solvent.

15. Method according to Claim 14, characterised in that as an organic solvent an alcohol is used, especially ethanol, isopropanol and, preferentially, methanol.

16. Method according to either of Claims 14 and 15, characterised in that as etching agent a strong base is used, especially sodium or potassium hydroxide.

17. Device for the production of perforations in a solid material in the form of a sheet comprising an irradiation device; a vacuum enclosure in which the material is housed characterised in that combined with the irradiation device is an isochronal cyclotron placed upstream, which permits a bombardment of heavy ions of the order of 2 MeV per nucleon and with an intensity of between $10^6$ and $10^{13}$ ions per second; associated with the high vacuum enclosure (12) is a sealed chamber (13); a diaphragm (15), capable of not substantially slowing down the speed of the ions, separating the enclosure (12) from the chamber (13); an unwinder (14) of the material (2) is housed in the chamber (13); and it comprises means (25) for deviating the ion beam (3).

18. Device according to Claim 17, characterised in that it comprises a primary vacuum pump (19) associated with the chamber (13) and a secondary vacuum pump (21) associated with the enclosure (12) in such a manner that the vacuum inside the chamber (13) is lower than that prevailing inside the enclosure (12), without the differential pressure exerted on the diaphragm (15) thereby being too great.

19. Device according to either of Claims 17 and 18, characterised in that the diaphragm (15) is a metallic film or alternatively made of a material which is mechanically resistant and not liable to be greatly damaged by the bombardment of particles (3), especially made of aluminium of a thickness especially between 8 and 12 microns.

20. Device according to any one of Claims 17 to 19, characterised in that the vacuum prevailing in the chamber (13) is of the order of $10^{-2}$ mm of mercury whereas the vacuum prevailing in the enclosure (12) is of the order of $10^{-6}$ mm of mercury.

21. Device according to any one of Claims 17 to 20, characterised in that the means (25) for deflecting, with time, the ion beam (3) ensure a transverse scanning of the strip of material (2) with the ion beam (3).

22. Device according any one of Claims 17 to 21, characterised in that the means for deflecting the ion beam (25) are a magnetic deflector.

23. Device according to Claim 22, characterised in that the magnetic deflector (25) comprises and electromagnet (26, 28) powered by an alternating current source (29), the magnetic pieces (26) of the electromagnet being made of laminated steel and the enclosure (12) positioned in the air gap (27) being produced from an electrically insulating material.

24. Device according to any one of Claims 17 to 23, characterised in that it further comprises means (31) for causing the angle of attack of the ions (3) to vary substantially over the same elementary surface of the material (2).

25. Device according to Claim 24, characterised in that the means (31) comprise a curved bearing surface (32) of the material (2) in the bombardment zone (11).

26. Device according to Claim 25, characterised in that the zone (11) for bombarding the material (2) is movably mounted between two extreme positions, drive means enabling it to pass from one of its positions to the other, in such a manner as to cause the angle of attack to vary.

27. Device according to any one of Claims 17 to 26, characterised in that it further comprises one or more masks made of a material whose nature and whose thickness are suitable for stopping the ions (3) so as to produce over the strip of material (2) borders or strips or surfaces (34) devoid of perforations (1).

FIG.1

FIG.2

FIG.3

# FIG. 4

# FIG. 5

# FIG. 6

# FIG.7

# FIG. 8

FIG.9A

FIG.9B

17

FIG.10A

FIG.10B